# EUROPÄISCHE PATENTANMELDUNG

(11) **EP 4 796 887 A1**
(43) Veröffentlichungstag der Anmeldung: **26.08.2026**
(21) Anmeldenummer: 26160090.2
(22) Anmeldetag: 23.02.2026
(51) Int. Cl.: F41B 11/646

(54) **PNEUMATISCHES SPORT- UND FREIZEITGERÄT**

(30) Priorität: 21.02.2025 DE 102025000783; 21.02.2025 CN 202510193531
(71) Anmelder: East Crane Industrial HK Limited, Hongkong (CN)
(72) Erfinder: Zhang, Dahe, Jiangmen City, Guangdong Province (CN)
(74) Vertreter: von Bülow & Tamada

(57) **Zusammenfassung**

Offenbart wird ein pneumatisches Sport- und Freizeitgerät (2) zum Abfeuern eines Projektils mittels Druckluft in einer Abschussrichtung (4), umfassend:
- eine Druckluftkammer (22), in der beweglich ein Kolben (24) zum Aufbau der Druckluft angeordnet ist,
- einen Aktuator (52), und
- ein Kolbenrückstellelement (34) zur Rückstellung des Kolbens (24) entgegen einer Bewegungsrichtung eines Aktuators (52),
dadurch gekennzeichnet, dass
- der Aktuator (52) eingerichtet ist, die Druckluftkammer (22) entgegen der Abschussrichtung (4) zu bewegen,
- wobei ein Druckluftkammerrückstellelement (32) zur Rückstellung der Druckluftkammer (22) entgegen der Bewegungsrichtung des Aktuators (52) und ein Bewegungsverzögerungselement (60) zum zeitlichen Verzögern der Rückstellung des Kolbens (24) gegenüber der Rückstellung der Druckluftkammer (22) vorhanden sind.

## Beschreibung

Die vorliegende Erfindung betrifft ein pneumatisches Sport- und Freizeitgerät gemäß dem Oberbegriff des geltenden Anspruchs 1.

Ein solches pneumatisches Sport- und Freizeitgerät ist aus der WO 2016 / 181506 A1 bekannt, in dem ein Blowback genannter Rückstoßeffekt durch eine gezielte Umlenkung von Druckluft erzeugt wird. Während ein Schuss ausgelöst wird, strömt ein Teil der Druckluft aus einer Ventilkammer in eine Kolbenkammer einer Projektilträgereinheit. Dieser Druckaufbau erzeugt einen Rückstoßimpuls, der die Projektilträgereinheit nach hinten bewegt. Die Bewegung erfolgt gleichzeitig mit dem Austritt des Projektils aus dem Lauf, wodurch ein spürbarer, direkt mit dem Schuss gekoppelter Rückstoß entsteht. Eine Rückstellfeder stoppt die Bewegung der Projektilträgereinheit und bringt sie wieder in die Ausgangsposition zurück. Durch diesen Mechanismus wird der Blowback mechanisch mit der eigentlichen Schussabgabe kombiniert, was dem Nutzer ein gewisses Rückstoßgefühl vermittelt.

Es ist Aufgabe der vorliegenden Erfindung, das bekannte pneumatische Sport- und Freizeitgerät zu verbessern.

Gemäß einem Aspekt der Erfindung umfasst ein Pneumatisches Sport- und Freizeitgerät, zum Abfeuern eines Projektils mittels Druckluft in einer Abschussrichtung eine Druckluftkammer, in der beweglich ein Kolben zum Aufbau der Druckluft angeordnet ist, einen Aktuator und ein Kolbenrückstellelement zur Rückstellung des Kolbens entgegen einer Bewegungsrichtung eines Aktuators. Erfindungsgemäß ist der Aktuator eingerichtet, die Druckluftkammer entgegen der Abschussrichtung zu bewegen, wobei ein Druckluftkammerrückstellelement zur Rückstellung der Drückluftkammer entgegen der Bewegungsrichtung des Aktuators und ein Bewegungsverzögerungselement zum zeitlichen Verzögern der Rückstellung des Kolbens gegenüber der Rückstellung der Druckluftkammer vorhanden sind.

Dem angegebenen pneumatischen Sport- und Freizeitgerät liegt die Überlegung zugrunde, dass herkömmliche pneumatische Sport- und Freizeitgeräte, die ein Projektil mittels Druckluft in einer Abschussrichtung abfeuern, keine explosionsartigen Druckwellen und so auch keinen Blowback genannten Rückstoßeffekt erzeugen. Für eine möglichst realistische Simulation einer Feuerwaffe ist eine solche Nachbildung des Blowback von Vorteil. Das eingangs erläuterte pneumatische Sport- und Freizeitgerät ist zwar in einem gewissen Umfang zur Erzeugung des Blowbacks fähig, ihm fehlt allerdings eine Repetierfunktion. Das heißt, das Gerät feuert zwar automatisch nach, doch das Nachladen und die erneute Spannungsaufbringung des Systems erfolgt nicht eigenständig, sondern ist an die Bewegung der Projektilträgereinheit gekoppelt. Dadurch ergibt sich eine weniger flexible Konstruktion, die in ihrer Funktionalität limitiert ist. Zudem ist der erzeugte Rückstoß relativ schwach, da die bewegte Masse vergleichsweise gering ist. Dies führt dazu, dass das Rückstoßgefühl weniger ausgeprägt und weniger realistisch ist als bei echten Feuerwaffen. Weiterhin ist das System konstruktiv komplex, da es eine präzise Druckluftsteuerung benötigt, um den Blowback zuverlässig auszulösen.

Im Gegensatz dazu bietet das angegebene pneumatische Sport- und Freizeitgerät mehrere Vorteile. Der Rückstoß wird kurz vor der Schussabgabe eingeleitet, wodurch das Gefühl eines echten Feuerwaffenrückstoßes realistischer nachgebildet werden kann. Dadurch fühlt sich der Schuss weicher und stabiler an, da der Impuls nicht ausschließlich durch die Projektilbeschleunigung erfolgt. Zudem ermöglicht das Gerät eine sehr einfache Repetierfunktion, da der Aktuator grundsätzlich beliebig so wählbar ist, dass er ohne aufwendige Mechanik oder komplizierte Ventilsysteme jederzeit wieder gespannt werden kann. Dies führt zu einer einfacheren Handhabung und potenziell höheren Zuverlässigkeit im Einsatz. Durch die Nutzung der Druckluftkammer als bewegte Masse anstelle der gesamten Druckluftkammer wird der Rückstoß gleichmäßiger und kräftiger spürbar. Das neue System bietet somit eine deutlich realistischere Blowback-Simulation bei gleichzeitig reduziertem konstruktiven Aufwand.

In einer Weiterbildung des angegebenen pneumatischen Sport- und Freizeitgerätes umfasst der Aktuator einen Zahnstangenantrieb mit einer an der Druckluftkammer angeordneten Zahnstange und einem Zahnrad, das umfänglich über einen Winkelbereich von kleiner als 360° mit Zähnen besetzt ist. Der Weiterbildung liegt die Überlegung zugrunde, die Repetierbarkeit des Systems mechanisch durch eine zuverlässige Zahnstangenbewegung bereitzustellen.

Die Zahnstangenbewegung ist grundsätzlich aus der V2- und V3-Gearboxtechnik bekannt, die sich in elektrisch betriebenen Airsoft-Waffen als Standard etabliert hat. Die V2-Gearbox (Version 2) ist eine weit verbreitete Konstruktionsvariante, die insbesondere in M4/M16-ähnlichen Airsoft-Replikaten zum Einsatz kommt. Sie zeichnet sich durch eine eher längliche Bauweise und eine zentral angeordnete Federführung aus. Die V3-Gearbox (Version 3) ist eine Weiterentwicklung mit modifizierter Form, die für andere Waffentypen wie AK-Modelle oder G36 genutzt wird. Sie unterscheidet sich durch eine robustere Konstruktion und eine andere Anordnung der internen Bauteile, was insbesondere für hohe Belastungen und alternative Antriebsmechanismen von Vorteil ist. Im Gegensatz zur bekannten V2- und V3-Gearboxtechnik, bei der der Kolben mit dem Zahnstangenantrieb angetrieben wird, ist es Grundgedanke dieser Weiterbildung mit dem Zahnstangenantrieb die Druckluftkammer anzutreiben.

Auf diese Weise ergibt sich eine höhere Energieeffizienz im Vergleich zum eingangs erläuterten pneumatischen Sport- und Freizeitgerät, da durch die mechanische Kopplung von Zahnstange und Zahnrad der pneumatische Druck optimal in eine lineare Bewegung umgesetzt wird, ohne dass signifikante Verluste durch Luftleckagen oder ineffiziente Luftumlenkung auftreten. Dies verbessert die Gesamtleistung und reduziert den Luftverbrauch. Gleichzeitig sorgt die Verwendung von V2- und V3-Gearbox-Komponenten für eine einfache Wartung und Austauschbarkeit, da viele Bauteile aus dem Airsoft-Bereich bereits modular verfügbar sind.

Die Bauweise trägt zudem zur Langlebigkeit des Mechanismus bei, da die Bewegung durch das Zahnrad kontrolliert wird und abrupte, ungedämpfte Stopbewegungen der Bauteile vermieden werden. Dies reduziert Verschleißerscheinungen und sorgt für eine stabilere, langlebigere Konstruktion. Der begrenzte Eingriffswinkel des Zahnrads erlaubt zudem eine kompakte Bauform, die sich leicht in bestehende Designs integrieren lässt, insbesondere in Systeme, die auf den bewährten Gearbox-Standard setzen.

In einer Weiterbildung des angegebenen pneumatischen Sport- und Freizeitgerätes umfasst der Aktuator einen Zahnstangenantrieb mit einer an der Druckluftkammer angeordneten Zahnstange und einem Zahnrad, das umfänglich über einen Winkelbereich von kleiner/gleich 180° mit Zähnen besetzt ist. Auf diese Weise ist in sehr einfacher Weise eine Repetierbarkeit geschaffen, da die Zahnstange direkt mit dem Getriebemechanismus in eine Richtung kämmt und so eine präzise und zuverlässige Rückstellbewegung ermöglicht. Die Drehbewegung des Zahnrads sorgt für eine gezielte Umwandlung der pneumatischen Energie in eine mechanisch kontrollierte Rückstoßbewegung. Da das Zahnrad nur über einen begrenzten Winkelbereich mit Zähnen besetzt ist, erfolgt die Kraftübertragung in einem definierten Abschnitt, wodurch eine klare Trennung zwischen der Rückwärts- und Vorwärtsbewegung des Aktuators entsteht. Dies führt zu einer gleichmäßigen und kontrollierten Rückstellbewegung, ähnlich der Funktionsweise einer echten Feuerwaffe.

In einer anderen Weiterbildung des angegebenen pneumatischen Sport- und Freizeitgerätes umfasst das Bewegungsverzögerungselement einen Schwenkriegel, der eingerichtet ist, mit einem Flansch am Kolben lösbar zu verrasten. Auf diese Weise kann die Bewegungsverzögerung zwischen Kolben und Druckluftkammer gezielt gesteuert werden, indem der Schwenkriegel den Kolben für eine definierte Zeitspanne in einer bestimmten Position hält und erst nach Freigabe eine Bewegung ermöglicht. Dies erlaubt eine präzise Synchronisation der Kolbenbewegung mit anderen Prozessen im System, insbesondere mit der Luftzufuhr und dem Ablauf des Blowback.

Ein wesentlicher Vorteil dieser Konstruktion liegt in der flexiblen Anpassung der Rückstoßcharakteristik. Da der Schwenkriegel den Kolben in einer definierten Position verriegelt, kann der Zeitpunkt des Rückstoßes genau gesteuert werden. Dies ermöglicht es, den Rückstoß entweder näher an den Moment des Schusses zu bringen oder bewusst zu verzögern, um verschiedene realistische Effekte zu simulieren. Dadurch kann das Gerät an verschiedene Kaliber oder Waffenmodelle angepasst werden, deren Rückstoßverhalten sich unterscheidet.

Ein weiterer Vorteil besteht in der mechanischen Entkopplung zwischen der Kolbenbewegung und der Druckluftkammer. Während im eingangs genannten pneumatischen Sport- und Freizeitgerät die Bewegungsverzögerung durch eine direkte Luftstromsteuerung realisiert ist, sorgt die mechanische Verrastung für eine robustere und verschleißärmere Lösung. Der Kolben bleibt stabil in seiner Position, bis der Schwenkriegel ihn freigibt, was unkontrollierte Luftverluste und ineffiziente Bewegungsabläufe reduziert. Dies kann auch dazu beitragen, den Luftverbrauch zu optimieren, da die Luftzufuhr gezielt und effizient genutzt wird.

Ein zusätzlicher Vorteil ergibt sich durch die verbesserte Kontrolle der Schusskadenz. Da der Kolben erst nach der definierten Verrastung freigegeben wird, kann die Taktung des Systems genauer abgestimmt werden. Dies kann insbesondere in vollautomatischen oder halbautomatischen Systemen genutzt werden, um ein realistisches und konsistentes Feuermuster zu erzeugen.

Weiterhin erleichtert die Verwendung eines mechanischen Verriegelungsmechanismus die einfache Anpassung und Wartung. Der Schwenkriegel kann so konstruiert werden, dass seine Haltekraft durch einfache mechanische Anpassungen, beispielsweise durch Federdruck oder eine verstellbare Rastposition, verändert werden kann. Dadurch kann der Nutzer das Verhalten des Geräts leicht modifizieren, ohne auf komplizierte elektronische oder pneumatische Steuermechanismen zurückgreifen zu müssen.

In einer zusätzlichen Weiterbildung des angegebenen pneumatischen Sport- und Freizeitgerätes umfasst der Schwenkriegel einen Haken, der durch den Flansch am Kolben in eine Verriegelungsrichtung verschwenkbar ist. Auf diese Weise kann der Kolben den Schwenkriegel direkt und ohne zusätzliche Aktuatoren betätigen, was die Konstruktion erheblich vereinfacht und die Anzahl der beweglichen Teile reduziert. Dies führt zu einer erhöhten Zuverlässigkeit und Robustheit, da weniger Komponenten gewartet oder aufeinander abgestimmt werden müssen.

Ein weiterer Vorteil dieser Lösung ist die selbstregulierende Mechanik. Da der Schwenkriegel durch den Kolben betätigt wird, passt sich das System automatisch an unterschiedliche Betriebsbedingungen an. Dies bedeutet, dass keine zusätzliche Sensorik oder Steuerung notwendig ist, um die richtige Verriegelungszeit oder den optimalen Moment der Freigabe zu gewährleisten. Der Mechanismus ist rein mechanisch und nutzt die Bewegung des Kolbens selbst zur Steuerung der Verrastung, wodurch die gesamte Konstruktion einfacher, robuster und weniger störanfällig wird.

Zudem verbessert diese Bauweise die Effizienz der Bewegungsverzögerung. Durch das direkte Eingreifen des Kolbens in die Verriegelung kann die Verzögerung präzise auf den Betriebsablauf abgestimmt werden, ohne dass externe Steuermechanismen eingreifen müssen. Dies ermöglicht eine dynamische Anpassung der Verzögerungszeit, abhängig von Faktoren wie Luftdruck, Kolbengeschwindigkeit oder Systembelastung. So kann das Timing des Blowback-Mechanismus feinjustiert werden, um verschiedene Rückstoßprofile oder unterschiedliche Feuermodi optimal zu simulieren.

Ein weiterer praktischer Vorteil ist die Verschleißminimierung. Da der Haken des Schwenkriegels durch den Flansch des Kolbens verschwenkt wird, erfolgt die Entriegelung durch eine sanfte, natürliche Bewegung, die keine zusätzlichen mechanischen Stöße oder übermäßigen Abrieb verursacht. Dies kann die Lebensdauer des Systems erheblich verlängern und reduziert den Wartungsaufwand.

Schließlich erlaubt diese Bauweise eine einfache Anpassung an unterschiedliche Waffenmodelle und -konfigurationen. Der Verriegelungsmechanismus kann durch Änderungen an der Geometrie des Flansches oder des Hakens feinjustiert werden, um spezifische Rückstoß- und Bewegungsprofile zu erzeugen. Damit eignet sich dieses Konzept besonders gut für modulare Sport- und Freizeitgeräte, die verschiedene Blowback-Effekte oder Feuermechanismen simulieren sollen.

In einer Weiterbildung des pneumatischen Sport- und Freizeitgerätes umfasst der Schwenkriegel in Bezug auf seine Schwenkachse gegenüberliegend zum Haken eine Verriegelungsschulter, unter die in der Verriegelungsrichtung ein Verriegelungselement schiebbar ist. Auf diese Weise interagiert das Verriegelungselement mechanisch mit dem Schwenkriegel, was eine robuste, reproduzierbare und sichere Funktion gewährleistet. Die mechanische Interaktion zwischen Verriegelungselement und Schwenkriegel sorgt für eine präzise und definierte Steuerung der Bewegungsverzögerung, ohne auf zusätzliche elektronische oder pneumatische Steuermechanismen angewiesen zu sein. Dies erhöht die Zuverlässigkeit des Systems und reduziert mögliche Fehlerquellen.

Ein weiterer Vorteil liegt in der Langlebigkeit der Verriegelungseinheit, da die Lasten gleichmäßig verteilt werden und punktuelle Verschleißerscheinungen minimiert sind. Die direkte mechanische Interaktion macht das System zudem unempfindlicher gegenüber Temperaturschwankungen oder Druckschwankungen in der Pneumatik. Darüber hinaus ermöglicht diese Lösung eine präzise Steuerung des Blowback-Timings, da das Verriegelungselement gezielt unter die Verriegelungsschulter geschoben wird und so den Kolben im gewünschten Moment freigibt. Dies verbessert nicht nur die Simulationseigenschaften des Geräts, sondern erlaubt auch eine gezielte Anpassung des Rückstoßverhaltens.

In einer besonderen Weiterbildung umfasst das angegebene pneumatische Sport- und Freizeitgerät das Verriegelungselement mit einer Verriegelungsanschlagschulter, die zum Bewegen des Verriegelungselements in Richtung des Schwenkriegels eingerichtet ist, eine Bewegungskraft von der Druckkammer aufzunehmen. Dadurch bewegt die Druckkammer sowohl den Schwenkriegel als auch das Verriegelungselement gleichzeitig, sodass eine automatische Synchronisierung gegeben ist. Diese direkte Kopplung der Bewegung vermeidet Verzögerungen oder Ungleichmäßigkeiten, die durch mechanische Spielräume oder externe Steuermechanismen entstehen könnten.

Ein weiterer Vorteil besteht darin, dass das System völlig ohne separate Antriebe oder zusätzliche Steuerkomponenten auskommt, was die Komplexität und Fehleranfälligkeit reduziert. Da die Bewegungskraft direkt von der Druckkammer abgeleitet wird, passt sich die Verriegelungsdynamik automatisch an den jeweiligen Betriebsdruck an. Dies stellt sicher, dass die Entriegelung stets mit der gleichen zeitlichen Präzision erfolgt, unabhängig von kleineren Schwankungen im Druckniveau oder Verschleißerscheinungen an beweglichen Teilen.

Zusätzlich ermöglicht diese Lösung eine kompakte Bauweise, da keine zusätzlichen Hebel oder Stellglieder erforderlich sind. Dies trägt zu einer höheren Zuverlässigkeit und geringeren Wartungsanforderungen bei. Durch die unmittelbare Kopplung der Bewegungsabläufe wird zudem sichergestellt, dass das Verriegelungselement und der Schwenkriegel stets synchron arbeiten, was eine gleichmäßige und vorhersehbare Repetierfunktion gewährleistet. Dies verbessert nicht nur die Funktionsweise des Systems, sondern auch das haptische Rückstoßgefühl für den Nutzer, da der Blowback-Mechanismus ohne ungewollte Verzögerungen oder inkonsistente Entriegelungsmomente abläuft.

In einer bevorzugten Weiterbildung des pneumatisches Sport- und Freizeitgerät ist der Flansch an einer Kontaktseite mit der Verriegelungsanschlagschulter konisch ausgebildet. Der konische Flansch sorgt für einen flächigen Anschlag des Schwenkhebels anstelle einer punkt- oder linienförmigen Belastung, wodurch lokale Spannungen im Material reduziert werden. Dies verhindert Kerbwirkungen und ungleichmäßigen Verschleiß, was insbesondere bei hohen Belastungszyklen die Langlebigkeit des Systems erhöht.

Ein weiterer Vorteil ist, dass die konische Form die Verriegelungskräfte optimal auf eine größere Fläche verteilt, wodurch das Bauteil widerstandsfähiger gegenüber mechanischen Belastungen wird. Zudem kann die Konizität dazu beitragen, dass der Schwenkhebel bei seiner Entriegelungsbewegung sanfter geführt wird, da er sich allmählich vom Flansch löst, anstatt abrupt aus einer definierten 90°-Stellung herauszukippen. Dadurch werden ruckartige Bewegungen minimiert, was sich positiv auf die mechanische Belastung des gesamten Systems auswirkt und störende Vibrationen oder Geräusche reduziert.

Ein weiterer funktionaler Vorteil der konischen Ausführung liegt in der Selbstzentrierung des Schwenkhebels. Durch die Schräge wird der Schwenkhebel beim Wiedereinrasten automatisch in die korrekte Position geführt, was die Zuverlässigkeit der Verriegelung erhöht und eine exakte Repetierbewegung sicherstellt. Gleichzeitig kann durch eine angepasste Konizität der Kontaktwinkel gezielt beeinflusst werden, um das Einrasten zu erleichtern oder den Widerstand der Verriegelung zu steuern, je nach gewünschter Balance zwischen Haltekraft und Leichtgängigkeit.

In einer bevorzugten Weiterbildung des Pneumatischen Sport- und Freizeitgerätes ist das Verriegelungselement auf einer quer zur Bewegungsrichtung des Verriegelungselementes verlaufenden Fangrampe angeordnet. Auf diese Weise wird ein effektiver Toleranzausgleich erreicht, da die schräge Rampe das Verriegelungselement sanft in seine Endposition leitet und verhindert, dass es sich verkantet oder durch Fertigungstoleranzen in seiner Funktion beeinträchtigt wird. Gleichzeitig reduziert die Fangrampe Reibung und mechanischen Widerstand, wodurch sich das Verriegelungselement leichtgängig bewegt und ein störungsfreier, gleichmäßiger Bewegungsablauf ermöglicht wird.

Ein weiterer Vorteil besteht in der Selbstzentrierung des Verriegelungselementes, da die Fangrampe automatisch kleinere Abweichungen in der Bauteilfertigung ausgleicht und so eine zuverlässige Verriegelung sichergestellt wird. Dies führt auch zu einer verringerten mechanischen Belastung der Bauteile, da Kräfte nicht abrupt auf einen einzelnen Punkt einwirken, sondern gleichmäßig verteilt werden. Dadurch sinkt das Risiko von Verschleiß und Materialermüdung, was wiederum die Lebensdauer des Systems erhöht.

Darüber hinaus trägt die Fangrampe zur Geräuschreduzierung bei, da das Verriegelungselement nicht mit einem harten Schlag auf eine starre Kante trifft, sondern kontrolliert und gedämpft in seine Position gleitet. Dies verbessert die akustische Wahrnehmung des Gerätes und sorgt für eine angenehmere Handhabung. Zudem ermöglicht die Fangrampe eine optimierte Kraftübertragung, indem sie die Bewegungskräfte so umleitet, dass der Einrastvorgang mit geringerem Kraftaufwand erfolgen kann, während gleichzeitig eine hohe Haltekraft im verriegelten Zustand gewährleistet bleibt.

Schließlich unterstützt die Fangrampe eine definierte und sanfte Entriegelungsbewegung, indem sie verhindert, dass das Verriegelungselement ruckartig freigegeben wird. Stattdessen wird es kontrolliert aus der Verriegelungsposition herausgeführt, was insbesondere bei einem hochfrequenten Repetiervorgang vorteilhaft ist. Insgesamt führt diese Weiterbildung zu einer robusteren, langlebigeren und benutzerfreundlicheren Mechanik, die sowohl mechanische Belastungen als auch den Verschleiß minimiert und gleichzeitig eine präzise, zuverlässige Verriegelungsfunktion bietet.

In einer weiteren Weiterbildung des angegebenen pneumatischen Sport- und Freizeitgerätes umfasst das Verriegelungselement eine Entriegelungsanschlagschulter, die zum Entriegeln des Schwenkriegels eingerichtet ist, eine Bewegungskraft aus einem Entriegelungsaktuator aufzunehmen. Auf diese Weise kann ein separater Mechanismus zur Entriegelung eingesetzt werden, der unabhängig vom Verriegelungsvorgang agiert. Dies ermöglicht eine präzise Steuerung des Entriegelungszeitpunkts, da dieser nicht zwangsläufig mit dem Ablauf des Verriegelungsvorgangs gekoppelt sein muss. Dadurch kann die Entriegelung gezielt zu einem optimalen Zeitpunkt erfolgen, was insbesondere bei variablen Betriebsmodi oder automatisierten Abläufen vorteilhaft ist.

Ein wesentlicher Vorteil dieser Anordnung ist die Flexibilität in der Steuerung der gesamten Mechanik. Während bei herkömmlichen Systemen Entriegelung und Verriegelung oft mechanisch unmittelbar gekoppelt sind, bietet diese Lösung die Möglichkeit, beide Prozesse unabhängig voneinander zu steuern. Dadurch lassen sich Betriebsparameter wie Verzögerungszeiten oder Reihenfolgen individuell anpassen, ohne dass Änderungen an der Verriegelungsmechanik erforderlich sind. Dies erhöht nicht nur die Anpassungsfähigkeit des Systems, sondern erlaubt auch eine Optimierung der Bewegungsabläufe hinsichtlich Effizienz und Belastung der Bauteile.

Ein weiterer Vorteil ergibt sich aus der Möglichkeit, unterschiedliche Arten von Entriegelungsaktuatoren zu verwenden. Die Entriegelung kann beispielsweise elektrisch, pneumatisch oder mechanisch durch eine zusätzliche Steuerkomponente realisiert werden. Dadurch lässt sich das Gerät leicht in verschiedene Anwendungen oder Steuerungssysteme integrieren, etwa für halbautomatische oder vollautomatische Betriebsmodi. Dies erhöht die Vielseitigkeit und erleichtert eine Anpassung an verschiedene Nutzerszenarien.

Zudem trägt diese Unabhängigkeit zur Langlebigkeit des Mechanismus bei, da die Verriegelung nicht durch die wiederholte Krafteinwirkung beim Entriegelungsvorgang belastet wird. Dies reduziert Verschleiß und verlängert die Lebensdauer der Bauteile. Darüber hinaus kann die Entriegelungsanschlagschulter so ausgelegt werden, dass sie nur minimale Kraft benötigt, um den Schwenkriegel zu lösen, was zu einer Reduktion der benötigten Aktuatorkraft führt und den Energieverbrauch senkt.

Schließlich ermöglicht diese Konzeption eine verbesserte Kontrolle über die Dynamik des Systems. So kann die Entriegelung verzögert, beschleunigt oder auch in einem definierten Bewegungsbereich begrenzt werden, ohne dass dies Auswirkungen auf die Funktion des Verriegelungsmechanismus hat. Dies erlaubt eine fein abgestimmte Steuerung des Gerätes, die sowohl die Präzision als auch die Betriebssicherheit verbessert.

In einer besonders bevorzugten Weiterbildung des pneumatischen Sport- und Freizeitgerätes sind die Verriegelungsanschlagschulter und die Entriegelungsanschlagschulter in der Bewegungsrichtung des Verriegelungselementes gesehen auf verschiedenen Seiten des Verriegelungselementes angeordnet. Auf diese Weise wird eine klare funktionale Trennung zwischen Verriegelungs- und Entriegelungsmechanismus erreicht, wodurch beide Prozesse räumlich unabhängig voneinander optimiert werden können. Dies erhöht die Robustheit des Systems, da keine mechanische Wechselwirkung zwischen den beiden Schultern auftreten kann, die zu unerwünschten Blockaden oder Fehlfunktionen führen könnte.

Ein wesentlicher Vorteil dieser Anordnung liegt in der verbesserten Kraftverteilung und der Möglichkeit, gezielt unterschiedliche Kräfte für Verriegelung und Entriegelung einzusetzen. Da die beiden Anschlagschultern räumlich voneinander getrennt sind, kann das Verriegelungselement so gestaltet werden, dass es in der Verriegelungsrichtung eine besonders stabile und belastbare Position einnimmt, während für die Entriegelung geringere Kräfte erforderlich sind. Dadurch wird der Verschleiß minimiert, insbesondere wenn hohe Haltekräfte erforderlich sind, die Entriegelung aber mit möglichst geringem Energieaufwand erfolgen soll.

Ein weiterer Vorteil ergibt sich aus der Möglichkeit, das Verriegelungselement effizient in ein sequenzielles oder synchronisiertes System zu integrieren. Da die Entriegelungsschulter unabhängig von der Verriegelungsschulter positioniert ist, können beide Mechanismen durch unterschiedliche Steuerungslogiken oder Aktuatoren betätigt werden, ohne sich gegenseitig zu beeinflussen. Dies erleichtert insbesondere den Einsatz in automatisierten oder variablen Betriebsmodi, bei denen unterschiedliche Bewegungszeiten oder Verzögerungen notwendig sind.

Zusätzlich verbessert diese Anordnung die Wartungsfreundlichkeit des Systems. Durch die klare Trennung der Verriegelungs- und Entriegelungsmechanismen ist es möglich, einzelne Komponenten gezielt auszutauschen oder zu optimieren, ohne dass Anpassungen am gesamten System vorgenommen werden müssen. Dies führt zu einer höheren Modularität und erleichtert zukünftige Weiterentwicklungen oder Anpassungen an spezifische Anforderungen.

Ein weiterer bedeutender Vorteil liegt in der Fehlertoleranz des Systems. Da die Entriegelung unabhängig von der Verriegelung erfolgt, kann eine Fehlfunktion oder eine unerwartete Blockade im Entriegelungsmechanismus nicht dazu führen, dass die Verriegelung ungewollt freigegeben wird. Dies erhöht die Betriebssicherheit und stellt sicher, dass die Verriegelung nur dann gelöst wird, wenn dies tatsächlich gewünscht ist. Gleichzeitig kann das System so gestaltet werden, dass die Entriegelung eine bewusste und gezielte Aktion erfordert, wodurch versehentliches oder unkontrolliertes Lösen der Verriegelung verhindert wird.

Durch diese Konzeption wird also nicht nur die mechanische Stabilität erhöht, sondern auch die funktionale Sicherheit und die Flexibilität des gesamten Systems verbessert, wodurch sich das Gerät für eine Vielzahl von Anwendungen optimieren lässt.

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 eine perspektische Ansicht eines pneumatischen Sport- und Freizeitgerätes in Form einer Luftdruckpistole;
Fig. 2 eine teilweise Explosionsansicht der Luftdruckpistole aus Fig. 1;
Fig. 3 eine Strukturdarstellung eines Luftpumpenmechanismus der Luftdruckpistole aus Fig. 1;
Fig. 4 den Luftpumpenmechanismus aus Fig. 3 in einem ersten Betriebszustand;
Fig. 5 den Luftpumpenmechanismus aus Fig. 3 in einem zweiten Betriebszustand; und
Fig. 6 den Luftpumpenmechanismus aus Fig. 3 in einem dritten Betriebszustand.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

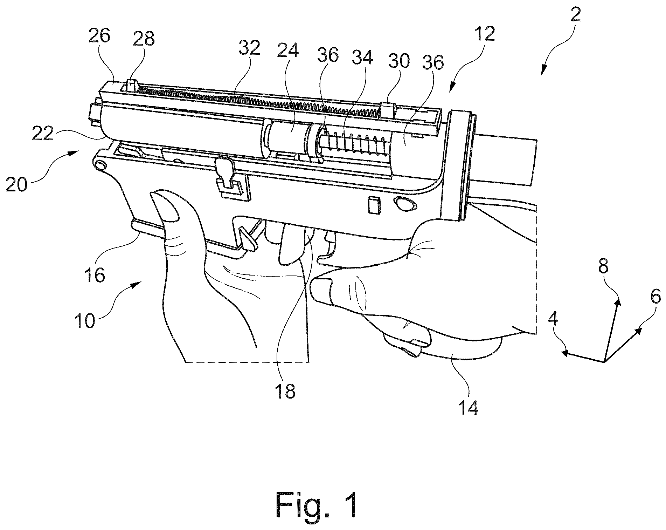

Es wird auf Fig. 1 Bezug genommen, die eine perspektische Ansicht eines pneumatischen Sport- und Freizeitgerätes in Form einer Luftdruckpistole 2 zeigt. Die Luftdruckpistole 2 soll in einem Raum betrachtet werden, der durch eine Schussrichtung 4, durch eine Querrichtung 6 quer zur Schussrichtung 4 und eine Höhenrichtung 8 quer zur Schussrichtung 4 und quer zur Querrichtung 6 aufgespannt ist.

Die Luftdruckpistole 2 besitzt in an sich bekannter Weise ein unteres Gehäuse 10, das sämtliche für den Anwender notwendigen Steuerelemente umfasst und in echten Feuerwaffen oft das rechtlich relevante Hauptbauteil mit der Seriennummer ist. In der Höhenrichtung 8 gesehen, ist auf das untere Gehäuse 10 ein oberes Gehäuse 12 aufgesetzt, das die beweglichen Teile zur Abgabe eines Schusses umschließt.

Am unteren Gehäuse 10 ist in der Schussrichtung 4 am hinteren Ende ein Pistolengriff 14 und am vorderen Ende ein Magazinschacht 16 zum Anschluss eines Magazins mit abzuschießenden Projektilen gehalten. Zwischen Pistolengriff 14 und Magazinschacht befindet sich ein Abzugshahn 18 zum Auslösen eines Schusses.

Das obere Gehäuse 12 ist in der Perspektive der Fig. 1 teilweise abgedeckt und legt die darin gehaltenen Komponenten offen. Es enthält eine Luftpumpe 20 mit einer sich in der Schussrichtung 4 erstreckenden zylinderförmigen Druckluftkammer 22 und einem darin in der Schussrichtung 4 beweglichen Kolben 24 in Anlehnung an bekannten Luftpumpen, wie sie beispielsweise zur Befüllung von Fahrzeugreifen mit Luft bekannt sind. Das besondere der Luftdruckpistole 2 ist, dass die zylinderförmige Druckluftkammer 22 anders als bei bekannten Luftpumpen beweglich angeordnet und in einer in der Höhenrichtung 8 gesehen über dieser angeordneten Luftkammerschiene 26 geführt ist.

Hierzu besitzt die zylinderförmige Druckluftkammer 22 eine Luftkammernase 28, die durch einen nicht weiter zu sehenden, sich in der Schussrichtung 4 erstreckenden Schlitz in der Luftkammerschiene 26 beweglich gesteckt ist, so dass sich die zylinderförmige Druckluftkammer 22 geführt durch die Luftkammersschiene 26 in der Schussrichtung 4 hin- und herbewegen kann. Die Luftkammerschiene 26 besitzt in der Schussrichtung 4 gesehen hinter der Luftkammernase 28 eine stationäre Schienennase 30, wobei zwischen der Luftkammernase 28 und der Schienennase 30 ein Druckluftkammerrückstellelement 32 hier in Form einer Spiralfeder gehalten ist, um die zylinderförmige Druckluftkammer 22 in der Schussrichtung 4 in eine Ausgangsstellung zurückzustellen.

Analog zur zylinderförmigen Druckluftkammer 22 ist auch der Kolben 24 in der Schussrichtung 4 durch ein entsprechendes Kolbenrückstellelement 34, hier ebenfalls in Form einer Spiralfeder zurückstellbar. Hierzu sind im oberen Gehäuse 12 am in der Schussrichtung 4 gesehenen rückwärtigen Ende und am Kolben 24 am in der Schussrichtung 24 gesehenen rückwärtigen Ende je ein Federlager 36 angeordnet, zwischen denen das Kolbenrückstellelement 34 gehalten ist, um den Kolben analog zur zylinderförmigen Druckluftkammer 22 in der Schussrichtung 4 in eine Ausgangsstellung zurückzustellen.

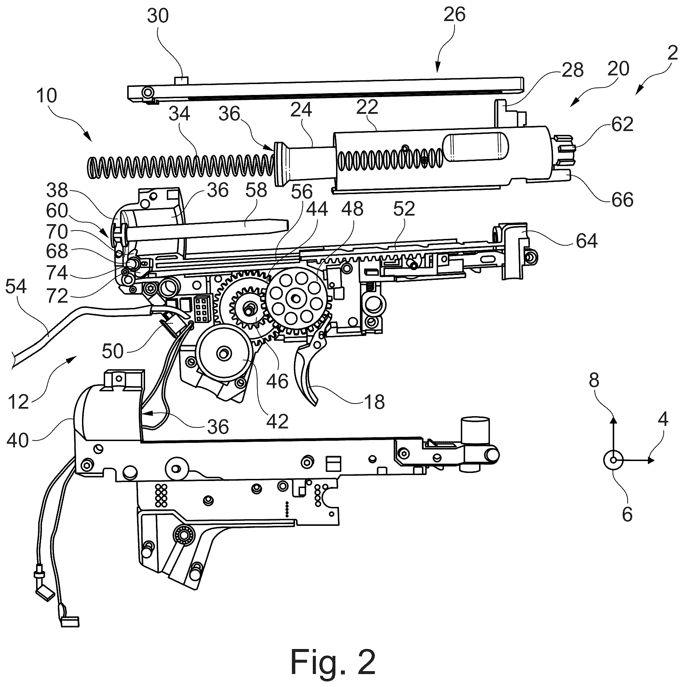

Es wird nun auf Fig. 2 Bezug genommen, die eine teilweise Explosionsansicht der Luftdruckpistole 2 aus Fig. 1 zeigt. Anhand dieser Darstellung sollen die im unteren Gehäuse 10 der Luftdruckpistole 2 vorhandenen Komponenten soweit zum Verständnis der Ausführung notwendig erläutert werden.

Das untere Gehäuse 10 ist aus einer in der Querrichtung 6 gesehenen hinteren linken Gehäusehälfte 38 und einer vorderen rechten Gehäusehälfte 40 zusammengesetzt. Im zusammengesetzten Zustand haust das unter Gehäuse 10 neben dem Abzugshahn 18 ein Schwungrad 42, eine unterers Zahnrad 44, ein mittleres Zahnrad 46, ein oberes Zahnrad 48 und eine Steuerelektronik 50 ein.

Das Schwungrad 42 wird durch einen nicht weiter sichtbaren Elektromotor angetrieben und sitzt in der Höhenrichtung 8 gesehen unterhalb des unteren Zahnrads 44, das auch als Bevel Gear bezeichnet wird. Dieses untere Zahnrad 44 überträgt das Drehmoment des Elektromotors auf das in der Höhenrichtung 8 gesehen darüber liegende mittlere Zahnrad 46, das auch als Spur Gear bezeichnet wird.

Das mittlere Zahnrad 46 überträgt die Drehbewegung in der Höhenrichtung 8 gesehen weiter nach oben auf das obere Zahnrad 48. Das obere Zahnrad 48, auch als Sector Gear bekannt, verfügt über eine begrenzte Anzahl von Zähnen auf einem Teil seines Umfangs. Dies ermöglicht eine zyklische Bewegung, bei der das obere Zahnrad 48 nur während eines bestimmten Abschnitts der Drehung in eine Zahnstange 52 zur Bewegungssteuerung der Druckluftkammer 22 eingreift, worauf an späterer Stelle näher eingegangen wird.

Die Steuerelektronik 50 ist mit dem Elektromotor sowie dem Abzugshahn 18 verbunden. Sie regelt die Stromversorgung des Elektromotors in Abhängigkeit von der Betätigung des Abzughahns 18 und entnimmt die dafür notwendige Energie über ein Kabel 54 einer nicht weiter gezeigten elektrischen Energieversorgung. Mit der Betätigung durch den Anwender löst der Abzughahns 18 in der Steuerelektronik 50 ein elektronisches Signal aus, das die Stromversorgung des Elektromotors startet. Dieser beginnt sich zu drehen und überträgt seine Drehbewegung direkt auf das Schwungrad 42, das als Energiepuffer dient und die gleichmäßige Bewegung des Systems unterstützt. Da Elektromotoren beim plötzlichen Einschalten einen Drehmomentanstieg erzeugen, verhindert das Schwungrad abrupte Bewegungen und gleicht ungleichmäßige Belastungen innerhalb des Getriebes aus. Dadurch wird die Übertragung auf die nachfolgenden Zahnräder 44, 46 und 48 gleichmäßiger und schonender für das Material.

Nachdem das Drehmoment des Schwungrads 42 auf das untere Zahnrad 44 übertragen ist treibt dieses das mittlere Zahnrad 46 an und leitet das Drehmoment aus dem Schwungrad 42 weiter an das obere Zahnrad 48. Das mittlere Zahnrad 46 sorgt für eine Übersetzung, derart dass die Drehgeschwindigkeit betriebsgerecht angepasst wird. In diesem Aufbau wird das Drehmoment in mehreren Stufen übertragen, anstatt direkt vom Motor auf das obere Zahnrad 48 zu wirken. Dies hat den Vorteil, dass eine präzise und kontrollierte Bewegung der Zahnstange 52 ermöglicht wird.

Das obere Zahnrad 48 hat eine partielle Verzahnung über einen Teil, das heißt, es besitzt nur auf einem Teil seines Umfangs, hier über 180° Zähne. Während der Rotation des oberen Zahnrads 48 greifen diese Zähne nur zeitweise in die Zahnstange 52 ein, die mit der Druckluftkammer 22 verbunden und in einer Zahnstangenführung 56 in und entgegen der Schussrichtung 4 geführt ist. Dadurch wird die Zahnstange 52 über ein erstes Zeitintervall linear angetrieben und über ein sich daran anschließendes zweites Zeitintervall freilaufend gelassen.

Die Zahnstange 52 ist mit der Druckluftkammer 22 in der Schussrichtung 4 formschlüssig verbindbar, um das zuvor beschriebene Drehmoment aus dem Elektromotor als Linearbewegung auf der Druckluftkammer 22 und den Kolben 24 zu übertragen. Der Kolben 24 lässt sich zur Linearführung auf einen entsprechenden in der Schussrichtung 4 ausgerichteten Führungsdorn 58 aufstecken.

Angetrieben durch das obere Zahnrad 48 drückt die Zahnstange 52 die Druckluftkammer 22 und damit auch den Kolben 24 gegen die Rückstellkraft des Druckluftkammerrückstellelement 32 beziehungsweise des Kolbenrückstellelement 34 entgegen der Schussrichtung 4 bis das Ende der Verzahnung des oberen Zahnrades 48 erreicht ist. In diesem Moment wird der formschlüssige Eingriff zwischen dem oberen Zahnrad 48 und der Zahnstange 52 aufgehoben, wodurch die Druckluftkammer 22 schlagartig freigegeben wird. Durch die zuvor gespeicherte Energie im Druckluftkammerrückstellelement 32 beschleunigt der Druckluftkammer 22 in Schussrichtung 4 nach vorn, während der Kolben 24 in einer noch zu beschreibenden Weise zunächst in seiner Position gehalten wird.

Der plötzliche Vortrieb der Druckluftkammer 22 erzeugt eine impulsartige Kraftübertragung auf das Gehäuse 10, 12 und vermittelt dem Anwender das Gefühl eines Blowbacks. Diese Rückstoßwirkung entsteht, da die Druckluftkammer 22 eine erhebliche Masse aufweist, die sich abrupt in Schussrichtung 4 bewegt und damit eine entgegengesetzte Reaktionskraft auf das untere Gehäuse 10, 12 überträgt. Die Dynamik dieses Rückstoßimpulses ist maßgeblich von der Bewegungsenergie der Druckluftkammer 22 abhängig, die sich aus der gespeicherten Kraft im Druckluftkammerrückstellelement 32 ergibt.

Während die Druckluftkammer 22 in Schussrichtung 4 beschleunigt wird, muss der Kolben 24 der Luftpumpe 20 zunächst in seiner Position gehalten werden, da sonst in der Druckluftkammer 22 kein Druck aufgebaut werden kann. Hierzu besitzt die Druckluftpistole 2 ein Bewegungsverzögerungselement 60, das den Kolben 24 zunächst arretiert und erst zu einem späteren Zeitpunkt freigibt, um die Druckerzeugung in der Druckluftkammer 22 zu realisieren.

Das Bewegungsverzögerungselement 60 ist so ausgeführt, dass es die Bewegung des Kolbens 24 relativ zur Druckluftkammer 22 zumindest verzögert oder sogar aktiv steuert. Dies kann durch jede beliebige mechanische oder pneumatische Haltevorrichtung geschehen, die den Kolben 24 erst dann freigibt, wenn eine vorbestimmte Bedingung wie beispielsweise eine bestimmte Position der Druckluftkammer 22 in Schussrichtung 4 oder eine bestimmte Zeitdauer erreicht wurde. Die Freigabe sollte in einem genau abgestimmten Moment erfolgen, um einerseits den Aufbau des notwendigen Drucks in der Druckluftkammer 22 zur Projektilbeschleunigung sicherzustellen gleichzeitig aber den Blowback nicht zu beeinträchtigen.

Konstruktiv kann das Bewegungsverzögerungselement 60 verschiedene Formen aufweisen. Es kann beispielsweise ein mechanischer Riegel sein, der sich in eine Verriegelungsposition bewegt, um den Kolben 24 in seiner Position zu halten, in der das Kolbenrückstellelement 34 gespannt ist. Alternativ kann ein pneumatisches oder federbasiertes System zum Einsatz kommen, das den Kolben 24 erst dann freigibt, wenn ein bestimmter Druckunterschied zwischen der Kolbenkammer und dem Umgebungsdruck erreicht ist. Dabei sorgt das Verzögerungselement dafür, dass die gespeicherte Energie gezielt zum richtigen Zeitpunkt freigesetzt wird. Ebenso denkbar wäre ein elektrisch gesteuerter Schalter, der zu dem oben genannten Ereignis zum Lösen des Kolbens 24 ausgelöst wird.

Durch die Bewegungsverzögerung wird sichergestellt, dass der Kolben 24 erst dann freigegeben wird, wenn die Druckluftkammer 22 bereits vollständig nach vorne bewegt wurde und dabei impulsbedingt den Blowback ausgelöst hat. Erst danach beginnt sich in der Druckluftkammer 22 ein maximaler Druck aufzubauen, indem der Kolben 24 durch seine Freigabe die in der Druckluftkammer 22 befindliche Luft komprimiert.

Der im der Druckluftkammer 22 aufgebaute Druck wird dann über einen Luftauslass 62 in eine mit einem Projektil bestückte und nicht weiter dargestellte Schusskammer ausgelassen. Das Projektil gelangt in die Schusskammer in an sich bekannter Weise über einen Projektilkanal 64 und einen an der Druckluftkammer 22 gehaltenen Schieber 66.

Dieser Ablauf orientiert sich explizit an der Funktionsweise einer realen Feuerwaffe: In einer Feuerwaffe entzündet sich zuerst das Treibladungspulver in der Patronenhülse, wodurch sich in der Patronenkammer ein explosionsartiger Druck aufbaut. Dieser Druck beschleunigt erst danach das Projektil durch den Lauf in Richtung des Ziels. Analog dazu wird in der hier beschriebenen Luftdruckpistole 2 der Blowback durch die impulsartige Bewegung der Druckluftkammer 22 nach vorne ausgelöst. Erst unmittelbar danach wird durch die Bewegung des Kolbens 24 die Luft in der Druckluftkammer 22 verdichtet und anschließend in die Schusskammer freigegeben, wodurch das Projektil beschleunigt wird.

Durch diese Sequenz wird sichergestellt, dass der Blowback-Effekt der pneumatischen Waffe dem Verhalten einer echten Feuerwaffe sehr nahekommt. Der spürbare Rückstoß erfolgt vor dem eigentlichen Schuss - genau wie bei einer Feuerwaffe, bei der der Rückstoß durch die Explosion der Treibladung unmittelbar beim Abfeuern der Patrone einsetzt, während das Projektil selbst erst einen Moment später den Lauf verlässt. Dieses realistische Timing verbessert das Handling und das Schusserlebnis, insbesondere für Anwender, die eine authentische Simulation einer echten Schusswaffe suchen.

Nachstehend soll ein Beispiel eines Bewegungsverzögerungselementes 60 in nicht einschränkender Weise in Form eines Schwenkhebels beschrieben werden. Es wird daher nachstehend der Übersichtlichkeit halber als Schwenkhebel 60 bezeichnet. Der Schwenkhebel 60 ist um eine in der Querrichtung 6 ausgerichtete Schwenkachse 68 verschwenkbar gelagert und besitzt in Bezug auf die Schwenkachse 68 einen radial abragenden Haken 70 und einen von der Schwenkachse 68 aus gesehen dem Haken 70 radial gegenüberliegend eine Verriegelungsschulter 72. Mit einer um die Schwenkachse 68 gelegten Torsionsfeder 74 lässt sich der Schwenkhebel stets in eine definierte Ausgangsstellung zurückführen.

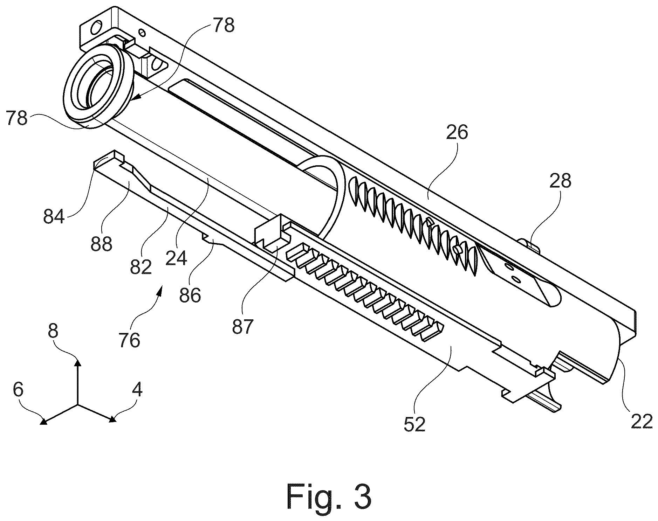

Es wird auf Fig. 3 Bezug genommen, anhand der zur Vorbereitung der Erläuterung der Wirkungsweise des Schwenkhebels 60 ein Verriegelungselement 76 an der Luftpumpe 20 zum Verriegeln des Schwenkhebels 60 erläutert werden soll. Das Verriegelungselement 76 umfasst eine sich in der Schussrichtung 4 erstreckende Steuerstange 82 und besitzt eine entgegen der Querrichtung 6 abragende Verriegelungsanschlagschulter 84 sowie eine in der Querrichtung 6 abragende Entriegelungsanschlagschulter 86. Während die Entriegelungsanschlagschulter 86 unmittelbar an der Steuerstange 82 gehalten ist, ist die Verriegelungsanschlagschulter 84 auf eine Rampe 88 aufgesetzt, die sich entgegen der Schussrichtung 4 von der Steuerstange 82 erhebt.

Bevor auf das Verriegelungselement 76 näher eingegangen wird, soll zunächst auf den Aufbau des Kolbens 24 am in der Schussrichtung 4 gesehenen hinteren Ende eingegangen werden. Dort ist am Kolben 24 ein Flansch 78 mit einer in der Schussrichtung 4 gesehenen konischen Vorderseite 80 ausgebildet, mit dem sich der Haken 70 am Schwenkhebel 60 betätigen lässt, wenn die Druckluftkammer 22 den Kolben 24 entgegen der Schussrichtung 4 bewegt. Der Flansch 78 bildet dabei eine Kontaktfläche für den Haken 70, die während der Rückwärtsbewegung des Kolbens 24 dazu dient, den Schwenkhebel 60 um die Schwenkachse 68 zu drehen und damit eine Verriegelung mit dem Verriegelungselement 76 herbeizuführen.

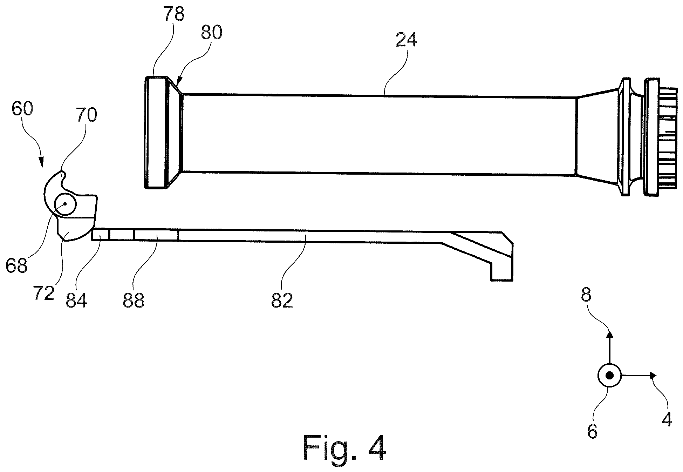

Die Wirkungsweise des Verriegelungselementes 76 soll nachstehend anhand der Figuren 4 bis 6 erläutert werden, die drei verschiedene Betriebszustände des Schwenkhebels 60 und des Verriegelungselementes 76 zeigen.

Im Ausgangszustand, wie in Fig. 4 dargestellt, ist der Schwenkhebel 60 durch die Torsionsfeder 74 in seine Grundstellung zurückgesetzt. Der Haken 70 ragt in den Bewegungsweg des Flansches 78 am Kolben 24. Bewegt sich der Kolben 24 entgegen der Schussrichtung 4, so stößt der Flansch 78 gegen den Haken 70 und bewirkt eine Verschwenkung des Schwenkhebels 60. Dies führt dazu, dass sich die Verriegelungsschulter 72 in der Höhenrichtung 8 gesehen über die Verriegelungsanschlagschulter 84 an der Steuerstange 82 bewegt.

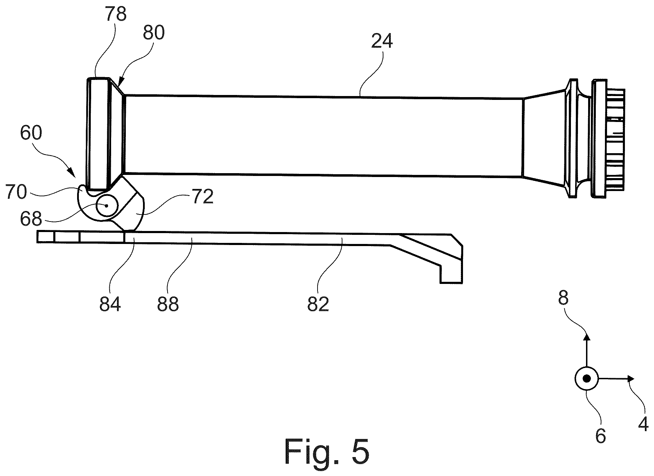

In diesem Zustand, wie in Fig. 5 gezeigt, kann die Steuerstange 82 entgegen der Schussrichtung 4 so bewegt werden, dass die Verriegelungsanschlagschulter 84 in der Höhenrichtung 8 die Verriegelungsschulter 72 unterhalb passiert. Die Bewegung kann dabei mit einer externen Kraftquelle erfolgen. In der vorliegenden Ausführung besitzt die Zahnstange 52 an ihrer in der Schussrichtung 4 gesehenen Rückseite eine Schubnase 87, mit der sich die Verriegelungsanschlagschulter 84 entgegen der Schussrichtung 4 schieben lässt. Dabei sorgt die konische Vorderseite 80 des Flansches 78 für eine definierte Anhebung des Schwenkhebels 60, da sie in diesem Moment exakt parallel zur Oberseite der Verriegelungsschulter 72 ausgerichtet ist. Durch diese Formgebung wird sichergestellt, dass sich die Verriegelungsschulter 72 kontrolliert über die Verriegelungsanschlagschulter 84 hinwegbewegt, ohne dass es zu unerwünschten Verkantungen oder zusätzlichen Reibungskräften kommt. Dies trägt zu einer reibungslosen und vorhersehbaren Bewegung der Steuerstange 82 bei, wodurch eine gleichmäßige und wiederholbare Funktion des Bewegungsverzögerungselements 60 gewährleistet wird.

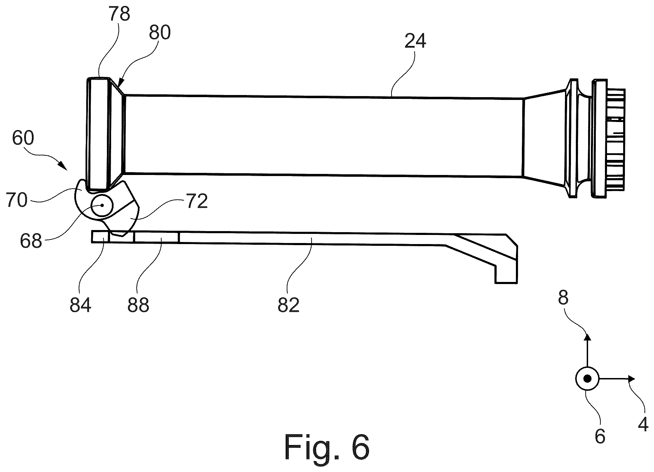

Nachdem die Verriegelungsanschlagschulter 84 der Steuerstange 82 die Verriegelungsschulter 72 vollständig in der Höhenrichtung 8 gesehen unterlaufen hat, wird sie wieder in Schussrichtung 4 bewegt. Sobald die Verriegelungsanschlagschulter 84 der Steuerstange 82 die in Schussrichtung 4 gesehene Vorderseite der Verriegelungsschulter 72 erreicht, entsteht eine formschlüssige Verrastung, die in Fig. 6 dargestellt ist. Durch diese Anordnung wird sichergestellt, dass der Schwenkhebel 60 stabil in seiner Position gehalten wird, bis eine gezielte Entriegelung erfolgt. Die Verriegelungsanschlagschulter 84 übernimmt dabei eine zusätzliche Sicherheitsfunktion, indem sie verhindert, dass sich der Schwenkhebel 60 unbeabsichtigt zurückdreht, solange die Steuerstange 82 nicht weiterbewegt wird. Dies ist insbesondere bei Vibrationen oder anderen äußeren Einflüssen relevant, die ansonsten zu einer unkontrollierten Freigabe des Kolbens 24 führen könnten.

Durch die spezifische Anordnung der Verriegelungsanschlagschulter 84 in Kombination mit der Verriegelungsschulter 72 entsteht somit eine zweistufige Sicherung des Bewegungsverzögerungselements 60. In der ersten Stufe, wie in Fig. 5 gezeigt, kann die Steuerstange 82 sich frei bewegen, während die Verriegelungsschulter 72 durch die konische Vorderseite 80 definiert über die Verriegelungsanschlagschulter 84 hinweggeführt wird. In der zweiten Stufe, dargestellt in Fig. 6, bewirkt die Bewegung der Steuerstange 82 in Schussrichtung 4 eine mechanische Blockade durch die formschlüssige Interaktion zwischen der Verriegelungsanschlagschulter 84 und der Verriegelungsschulter 72. Dies stellt sicher, dass der Kolben 24 bis zur gezielten Entriegelung zuverlässig gehalten wird, sodass die Druckluft im Druckluftkammer 22 vollständig aufgebaut werden kann, bevor der Kolben 24 zur Auslösung des Schusses freigegeben wird.

Die gezielte Entriegelung erfolgt dann durch ein Ziehen der Steuerstange 82 in Schussrichtung 4 an der Entriegelungsanschlagschulter 86, wodurch die Verriegelungsanschlagschulter 84 die Verriegelungsschulter 72 wieder in der Höhenrichtung 8 nach oben zieht. Dies bewirkt, dass die zuvor bestehende formschlüssige Blockade zwischen der Verriegelungsschulter 72 und der Verriegelungsanschlagschulter 84 aufgehoben wird. Sobald dieser Formschluss gelöst ist, kann sich der Kolben 24 unter dem Einfluss der in der Druckluftkammer 22 gespeicherten Druckluft ungehindert in Schussrichtung 4 bewegen, was weiter oben bereits erläutert ist.

Nach der Freigabe des Kolbens 24 und der damit verbundenen Druckentladung sorgt die Rückstellkraft der Torsionsfeder 74 dafür, dass der Schwenkhebel 60 wieder in seine Ausgangsposition zurückkehrt. Die Steuerstange 82 kann anschließend durch eine Bewegung entgegen der Schussrichtung 4 wieder in ihre Ausgangsstellung gebracht werden, wodurch sich das System für den nächsten Schuss automatisch vorbereitet. Durch diese Konstruktion wird gewährleistet, dass der gesamte Ablauf der Verriegelung, Verzögerung und Entriegelung präzise gesteuert und wiederholt werden kann. Dies trägt dazu bei, dass der Blowback-Effekt in realitätsnaher Weise mit einem Repetiermechanismus erzeugt wird.

## Patentansprüche

1. Pneumatisches Sport- und Freizeitgerät (2) zum Abfeuern eines Projektils mittels Druckluft in einer Abschussrichtung (4), umfassend:
- eine Druckluftkammer (22), in der beweglich ein Kolben (24) zum Aufbau der Druckluft angeordnet ist,
- einen Aktuator (52), und
- ein Kolbenrückstellelement (34) zur Rückstellung des Kolbens (24) entgegen einer Bewegungsrichtung eines Aktuators (52),
**dadurch gekennzeichnet, dass**
- der Aktuator (52) eingerichtet ist, die Druckluftkammer (22) entgegen der Abschussrichtung (4) zu bewegen,
- wobei ein Druckluftkammerrückstellelement (32) zur Rückstellung der Druckluftkammer (22) entgegen der Bewegungsrichtung des Aktuators (52) und ein Bewegungsverzögerungselement (60) zum zeitlichen Verzögern der Rückstellung des Kolbens (24) gegenüber der Rückstellung der Druckluftkammer (22) vorhanden sind.

2. Pneumatisches Sport- und Freizeitgerät (2) nach Anspruch 1, wobei der Aktuator (52) einen Zahnstangenantrieb mit einer an der Druckluftkammer (22) angeordneten Zahnstange (52) und einem Zahnrad (48) umfasst, das umfänglich über einen Winkelbereich von kleiner als 360°, vorzugsweise von kleiner/gleich 180° mit Zähnen besetzt ist.

3. Pneumatisches Sport- und Freizeitgerät (2) nach Anspruch 1 oder 2, wobei das Bewegungsverzögerungselement (60) einen Schwenkriegel (60) umfasst, der eingerichtet ist, mit einem Flansch (78) am Kolben (24) lösbar zu verrasten.

4. Pneumatisches Sport- und Freizeitgerät (2) nach Anspruch 3, wobei der Schwenkriegel (60) einen Haken (70) umfasst, der durch den Flansch (78) am Kolben (24) in eine Verriegelungsrichtung verschwenkbar ist.

5. Pneumatisches Sport- und Freizeitgerät (2) nach Anspruch 4, wobei der Schwenkriegel (60) in Bezug auf seine Schwenkachse (68) gegenüberliegend zum Haken (70) eine Verriegelungsschulter (72) umfasst, unter die in der Verriegelungsrichtung ein Verriegelungselement (76) schiebbar ist.

6. Pneumatisches Sport- und Freizeitgerät (2) nach Anspruch 5, umfassend das Verriegelungselement (76) mit einer Verriegelungsanschlagschulter (84), die zum Bewegen des Verriegelungselementes (76) in Richtung des Schwenkriegels (60) eingerichtet ist, eine Bewegungskraft von der Druckluftkammer (22) aufzunehmen.

7. Pneumatisches Sport- und Freizeitgerät (2) nach Anspruch 6, wobei der Flansch (78) an einer Kontaktseite mit der Verriegelungsanschlagschulter (84) konisch ausgebildet ist.

8. Pneumatisches Sport- und Freizeitgerät (2) nach Anspruch 6 oder 7, wobei das Verriegelungselement (76) auf einer quer zur Bewegungsrichtung des Verriegelungselementes (76) verlaufenden Fangrampe (88) angeordnet ist.

9. Pneumatisches Sport- und Freizeitgerät (2) nach einem der Ansprüche 5 bis 8, wobei das Verriegelungselement (76) eine Entriegelungsanschlagschulter (86) umfasst, die zum Entriegeln des Schwenkriegels (60) eingerichtet ist, eine Bewegungskraft aus einem Entriegelungsaktuator aufzunehmen.

10. Pneumatisches Sport- und Freizeitgerät (2) nach Anspruch 9, wobei die Verriegelungsanschlagschulter (84) und die Entriegelungsanschlagschulter (86) in der Bewegungsrichtung des Verriegelungselementes (76) gesehen auf verschiedenen Seiten des Verriegelungselementes (76) angeordnet sind.
